# EUROPEAN PATENT APPLICATION

(11) **EP 4 694 422 A1**
(43) Date of publication of application: **11.02.2026**
(21) Application number: 23932069.0
(22) Date of filing: 06.04.2023
(51) Int. Cl.: H04W 64/00

(54) **TERMINAL, BASE STATION, AND COMMUNICATION METHOD**

(71) Applicant: NTT DOCOMO, INC., Tokyo 100-6150 (JP)
(72) Inventor: OKAMURA, Masaya, Tokyo 100-6150 (JP); TAKEDA, Daiki, Tokyo 100-6150 (JP); SHIMA, Kousuke, Tokyo 100-6150 (JP); HARADA, Hiroki, Tokyo 100-6150 (JP); ECHIGO, Haruhi, Tokyo 100-6150 (JP)
(74) Representative: Hoffmann Eitle
(86) International application number: PCT/JP2023/014312
(87) International publication number: WO 2024/209658

(57) **Abstract**

A terminal includes: a reception unit configured to receive configuration information for carrier phase positioning from a network; and a control unit configured to determine, in carrier phase positioning, a positioning method to be used for wave number determination based on assistance data or a request for assistance data.

## Description

### Technical Field

The present invention relates to a positioning technique in a radio communication system.

### Background Art

In 3GPP (registered trademark) (3rd Generation Partnership Project), in order to realize further increase in system capacities, further increase in data transmission rates, further reduction in delays in radio sections, and the like, a radio communication scheme called 5G or NR (New Radio) (hereinafter, the radio communication scheme is referred to as "5G" or "NR") has been developed. In 5G, various radio technologies have been studied in order to satisfy the requirement that the delay in the radio section be less than or equal to 1 ms while achieving a throughput greater than or equal to 10 Gps.

In addition, NR positioning for performing positioning using a reference signal or the like has been studied. In addition, as a function extension of the general-purpose NR Positioning, Carrier Phase Positioning (CPP), which is a high-accuracy positioning method using a carrier phase adopted in GNSS and the like, has been studied.

### Citation List

### Non-Patent Literature

[Non-Patent Literature 1] 3GPP TS 37.355 V17.4.0 (2023 to 03)
[Non-Patent Literature 2] 3GPP TS 38.455 V17.4.0 (2023 to 03)

### Summary of Invention

### Technical Problem

In ambiguity resolution for carrier phase positioning, the use of an existing positioning method is being considered, for example for calculating an initial value thereof.

However, there is a problem that it is not clear to the terminal or the base station which positioning method should be used for ambiguity resolution.

The present invention has been made in view of the above points, and an object of the present invention is to provide a technique that enables application of an appropriate positioning method to ambiguity resolution in carrier phase positioning.

### Solution to Problem

According to the disclosed technique, there is provided A terminal including:
a reception unit configured to receive configuration information for carrier phase positioning from a network; and
a control unit configured to determine, in carrier phase positioning, a positioning method to be used for wave number determination based on assistance data or a request for assistance data.

### Advantageous Effects of Invention

According to the disclosed technique, it becomes possible to apply an appropriate positioning method to ambiguity resolution in carrier phase positioning.

### Brief Description of Drawings

The drawing numbers are as follows.

[Fig. 1] FIG. 1 is a diagram for explaining a radio communication system according to an embodiment of the present invention;
[Fig. 2] FIG. 2 is a diagram for explaining a radio communication system according to an embodiment of the present invention;
[Fig. 3] FIG. 3 is a diagram showing a configuration in which a plurality of base stations exist;
[Fig. 4] FIG. 4 is a diagram for explaining carrier phase positioning (CPP);
[Fig. 5] FIG. 5 is a diagram for explaining carrier phase positioning (CPP);
[Fig. 6] FIG. 6 is a sequence diagram showing an example of signaling;
[Fig. 7] FIG. 7 is a diagram illustrating an example of information provided as notification by signaling;
[Fig. 8] FIG. 8 is a sequence diagram showing an example of signaling;
[Fig. 9] FIG. 9 is a diagram illustrating an example of information provided as notification by signaling;
[Fig. 10] FIG. 10 is a diagram illustrating an example of information provided as notification by signaling;
[Fig. 11] FIG. 11 is a diagram illustrating an example of information provided as notification by signaling;
[Fig. 12] FIG. 12 is a diagram illustrating an example of information provided as notification by signaling;
[Fig. 13] FIG. 13 is a sequence example of a request/response;
[Fig. 14] FIG. 14 is a diagram illustrating an example of information provided as notification by signaling;
[Fig. 15] FIG. 15 is a diagram illustrating an example of information provided as notification by signaling;
[Fig. 16] FIG. 16 is a sequence example of capability information reporting;
[Fig. 17] FIG. 17 is a diagram showing an example of a functional configuration of a base station 10 and an LMF 30 according to an embodiment of the present invention;
[Fig. 18] FIG. 18 is a diagram showing an example of a functional configuration of a terminal 20 according to an embodiment of the present invention;
[Fig. 19] FIG. 19 is a diagram showing an example of a hardware configuration of the base station 10, the terminal 20, or the LMF 30 according to an embodiment of the present invention; and
[Fig. 20] FIG. 20 is a diagram showing an example of a vehicle.

### Description of Embodiments

Hereinafter, embodiments of the present invention will be described with reference to the drawings. The embodiment described below is an example, and the embodiment to which the present invention is applied is not limited to the following embodiment.

### (System Configuration)

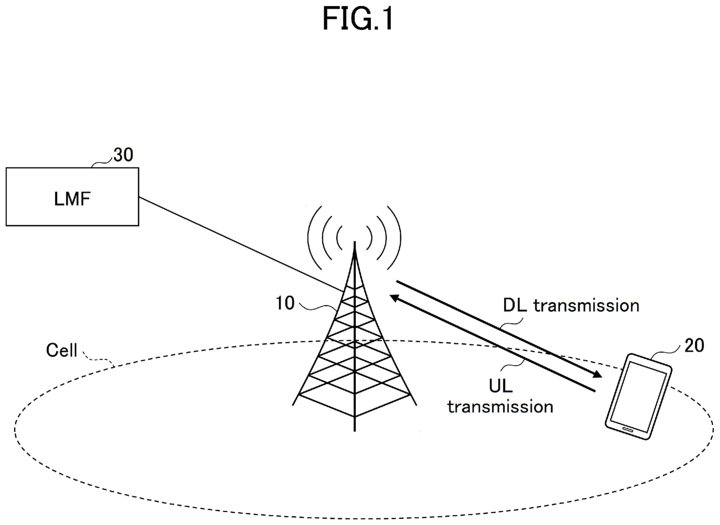

FIG. 1 is a diagram for explaining a radio communication system according to an embodiment of the present invention. As shown in FIG. 1, the radio communication system according to the embodiment of the present invention includes a base station 10 and a terminal 20. The core network is provided with an LMF 30, and the LMF 30 is capable of communicating with the base station 10. Note that the LMF 30 may communicate with the base station 10 via an AMF. The LMF 30 is an example of a network apparatus. The base station 10 is also an example of a network apparatus. The LMF 30 may be referred to as a management apparatus.

Although Fig. 1 shows only one base station 10 and one terminal 20, this is merely illustrative; there may be multiple base stations and/or terminals. For example, several base stations 10 that transmit a DL-PRS (positioning reference signal) to be received by the terminal 20 may be provided. One, some, or all of these base stations 10 may be airborne devices, e.g., satellites or high-altitude platform stations (HAPS).

The transmission source of the DL-PRS may be referred to as a transmission reception point (TRP). The TRP may be referred to as a transmission point or a reception point. The TRP may be referred to as a base station.

The base station 10 is a communication apparatus that provides one or more cells and performs radio communication with the terminal 20. The physical resources of the radio signal are defined in the time domain and the frequency domain, the time domain may be defined by the number of OFDM symbols, and the frequency domain may be defined by the number of subcarriers or the number of resource blocks. In addition, a transmission time interval (TTI) in the time domain may be a slot, or a TTI may be a subframe. Note that the cell and the CC may be considered to be synonymous.

The base station 10 can perform carrier aggregation in which a plurality of cells (a plurality of CCs (component carriers)) are bundled to communicate with the terminal 20. In the carrier aggregation, one PCell (primary cell) and one or more SCells (secondary cells) are used.

The base station 10 transmits a synchronization signal, system information, and the like to the terminal 20. The synchronization signal is, for example, an NR-PSS and an NR-SSS. The system information is transmitted, for example, in the NR-PBCH or the PDSCH, and is also referred to as broadcast information. As illustrated in FIG. 1, the base station 10 transmits a control signal or data to the terminal 20 on a downlink (DL), and receives a control signal or data from the terminal 20 on an uplink (UL). Note that, although what is transmitted on a control channel such as a PUCCH or a PDCCH is referred to as a control signal and what is transmitted on a shared channel such as a PUSCH or a PDSCH is referred to as data, such a name is an example. Also, UCI (Uplink Control Information) is transmitted by the PUCCH or the PUSCH.

The terminal 20 is a communication apparatus having a radio communication function, such as a smartphone, a mobile phone, a tablet, a wearable terminal, and a communication module for M2M (Machine-to-Machine). As illustrated in FIG. 1, the terminal 20 receives a control signal or data from the base station 10 in the DL and transmits a control signal or data to the base station 10 in the UL, thereby using various communication services provided by the radio communication system. Note that the terminal 20 may be referred to as a UE, and the base station 10 may be referred to as a gNB. Also, each of the terminal 20 and the base station 10 have a carrier phase positioning function.

The terminal 20 can perform carrier aggregation in which a plurality of cells (a plurality of component carriers (CCs)) are bundled to communicate with the base station 10. In the carrier aggregation, one PCell (primary cell) and one or more SCells (secondary cells) are used. Also, a PUCCH-SCell with PUCCH may be used.

The LMF 30 is a function (apparatus) that performs communication control related to a location information service defined in 5GC. The LMF 30 may be referred to as a location management server, a location management apparatus, or a management apparatus. The LMF 30 can receive measured results (phases, received powers, time differences, angles, etc.) of the reference signals from the terminal 20 or the base station 10, and calculate the position of the terminal 20. The LMF 30 may provide configuration information or control information related to positioning to the terminal 20 and the base station 10.

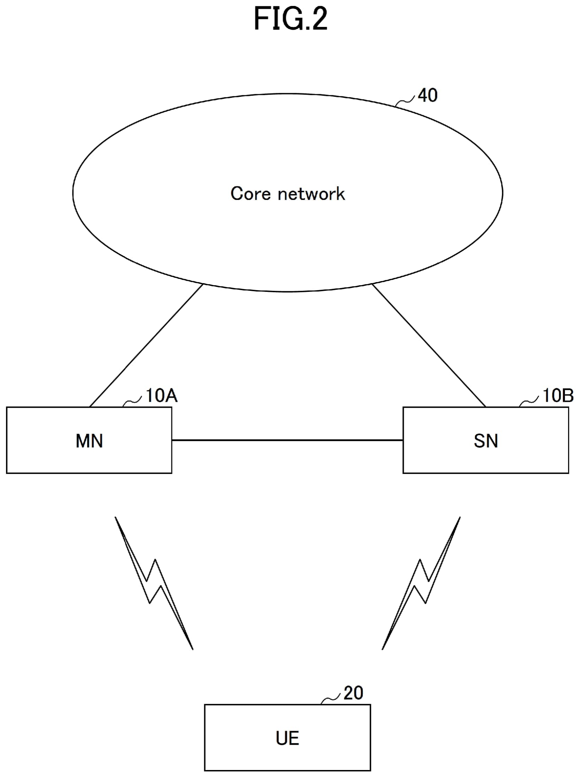

FIG. 2 illustrates a configuration example of a radio communication system in a case where dual connectivity (DC) is executed. As shown in FIG. 2, the base transceiver station 10A that serves as a master node (MN) and the base transceiver station 10B that serves as a secondary node (SN) are provided. The base stations 10A and 10B are connected to the core networks 40, respectively. The terminal 20 may communicate with both the base station 10A and the base station 10B.

A cell group provided by a base station 10A that is an MN is referred to as a master cell group (MCG), and a cell group provided by a base station 10B that is an SN is referred to as a secondary cell group (SCG). In DC, the MCG includes one PCell and one or more SCells, and the SCG includes one PSCell (Primary SCell) and one or more SCells.

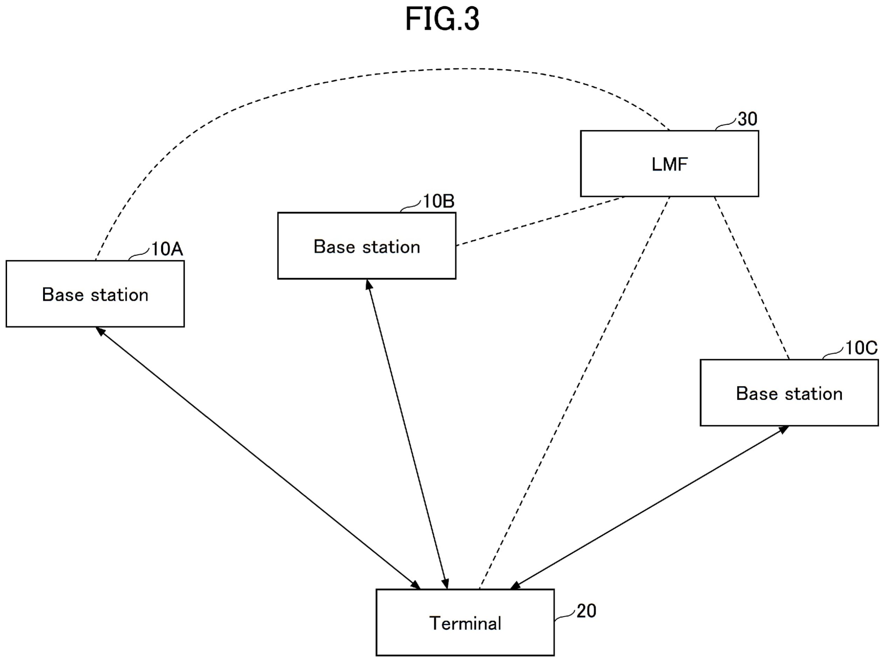

The processing operation in the present embodiment may be executed by the system configuration shown in FIG. 1, the system configuration shown in FIG. 2, or a system configuration other than these. FIG. 3 illustrates an example of a case where the terminal 20 performs positioning by receiving reference signals from a plurality of base stations 10A to 10C. For example, the position of the terminal 20 can be obtained by obtaining distances (or angles) between the terminal 20 and a plurality of base stations.

The distance between the terminal 20 and the base station can be obtained from an arrival time of a signal or a wave number (wave number * wavelength) of a carrier wave of a signal. In the present embodiment, the wave number of the carrier wave is used as described later.

### (Carrier Phase Measurement)

A reference signal used for positioning is referred to as a positioning reference signal (PRS). In the present embodiment, the terminal 20 or the base station 10 performs carrier phase positioning (CPP). The CPP is a high-precision positioning method using a carrier phase adopted in the GNSS and the like. Note that the terminal 20 or the base station 10 performing the carrier phase positioning may perform phase measurement of a received signal, or may perform position calculation (distance calculation) together with the phase measurement.

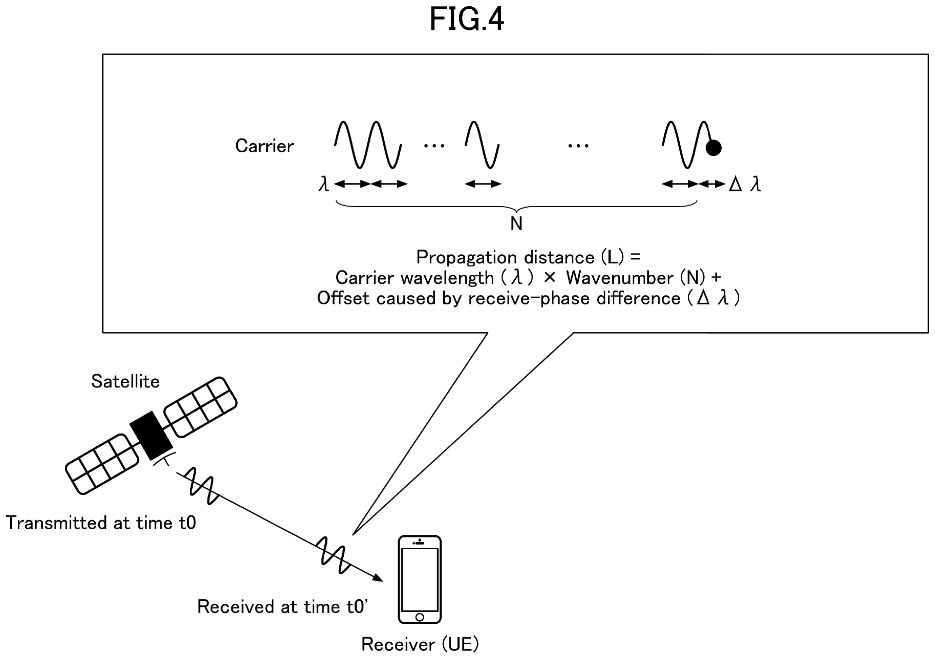

FIG. 4 shows an overview of the CPP. FIG. 4 shows an example in which the base station 10 is a satellite. As shown in FIG. 4, in the CPP, the position of the positioning point is obtained by obtaining the distance between the base station 10 and the positioning point using the number of carriers and the reception phase difference of the carriers (the phase of a portion less than one wave). Specifically, the arrival distance L can be expressed as "arrival distance (L)=carrier wavelength(λ) x wave number (N) +deviation (Δλ) due to reception phase difference". Further, the transmission time (t0) and the reception time (t0') are used to calculate the phases at t0'. More specifically, after calculating the pseudo distance from the propagation time, the distance is calculated with higher accuracy from the number of carriers and the phase.

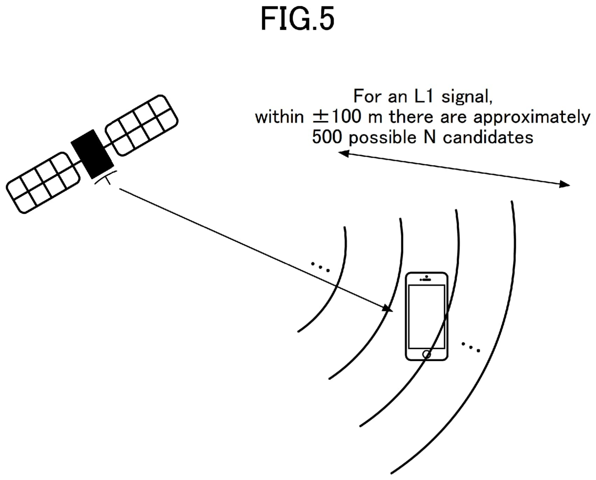

The phase corresponding to Δλ can be determined by measuring a reference signal, but the wave number (N) cannot be determined by one measurement. As shown in FIG. 5, when the L1 signal is used, there are about 500 candidates of N (wave number) in a width of 100 m.

In the CPP, a process of determining the wave number (N) is called Ambiguity Resolution (AR). Here, in the GNSS, it is common to perform AR after calculating an initial value of a wave number (i.e., narrowing down candidates of a position to some extent by using a propagation time) by using a plurality of satellites.

Several methods have been proposed as a method of determining the wave number (N), and the following methods (1) and (2) are typical methods.

### (1) Method of using a plurality of carrier waves of different frequencies

By utilizing the phase of carriers whose wavelengths (frequencies) differ, the number of candidate points can be greatly reduced. For example, carriers of different wavelengths such as the L1 signal (1575.42 MHz) and the L2 signal (1227.60 MHz) are used.

### (2) Method of using satellite movement

Since the coordinates of the GPS satellite change every moment, the wave number (N) is narrowed down by receiving the signal by the receiver a plurality of times.

### (About Problem)

In 3GPP (registered trademark), a method using an existing positioning method (referred to as a legacy positioning method herein) is being studied as one method used in the ambiguity resolution of CPP. Examples of the existing positioning method include TDOA, Multi-RTT, RSTD, RTOA, UE Rx-Tx time difference measurements, gNB Rx-Tx time difference measurements, and the like.

An example CPP flow for this approach is as follows. Note that "terminal 20/base station 10" indicates that the subject that performs CPP may be the terminal 20 or the base station 10. In the present specification, "/" means "or" unless otherwise specified.

Step 1: The terminal 20/base station 10 that performs CPP performs ambiguity resolution using the legacy positioning method, thereby determining an approximate wave number (N) and propagation distance. The approximate wave number (N) may be referred to as an initial value. Note that the terminal 20/base stations 10 may measure a reference signal by the legacy positioning method, notify the LMF 30 of the measurement result, and the LMF 30 may calculate the initial value.

Step 2: The terminal 20/base station 10 determines the wave number (N) from the received phase value and calculates the propagation distance with a granularity finer than one carrier wavelength. Alternatively, the terminal 20/base station 10 may report the measured received phase value to the LMF 30, in which case the LMF 30 can perform the propagation-distance calculation with a granularity finer than one carrier wavelength.

However, it is not clear which legacy positioning method should be used for ambiguity resolution in the terminal 20/base station 10. That is, an appropriate indication method or switching method of the legacy positioning method used in the ambiguity resolution of the CPP is required.

The following proposes methods for indicating or switching the legacy positioning method used for ambiguity resolution in CPP (NR CPP) and explains the technology that enables a flexible ambiguity-resolution function tailored to the positioning environment.

### (Overview of Embodiment)

Hereinafter, as embodiments for solving the above problem, Embodiment 0 to Embodiment 4 will be described. The outlines of the Embodiment 0 to Embodiment 4 are as follows.

Embodiment 0 (High Level Proposal): The terminal 20 assumes that the NR CPP and the other NR positioning method are configured at the same time.

Embodiment 1: The terminal 20 assumes that the NR positioning method applied in the ambiguity resolution of the NR CPP is signaled by RRC/MAC-CE/DCI/LPP.

Embodiment 2: The terminal 20 assumes that the terminal 20 determines the NR positioning method applied to the ambiguity resolution of the NR CPP from assistance data.

Embodiment 3: The terminal assumes that the terminal 20 requests assistance data necessary for ambiguity resolution of the NR CPP from the network.

Embodiment 4: The terminal 20 reports capability (capability information) regarding ambiguity resolution of the NR CPP to the network.

In the above-described Embodiments 0 to 4, the assumed subject is the terminal 20, but the assumed subject may be the base station 10.

Hereinafter, each embodiment will be described in detail. Any of or all of the Embodiments 0 to 4 can be combined and implemented.

### (Embodiment 0)

First, the Embodiment 0 will be described. In the Embodiment 0, it is assumed that the terminal 20/base station 10 is configured with the NR CPP and the other NR positioning method at the same time.

For example, in the DL CPP, the NR CPP and the other NR positioning method are simultaneously configured from the base station/LMF 30 (network) to the terminal 20.

In the UL CPP, for example, the NR CPP and the other NR positioning method are simultaneously configured from the LMF 30 to the base station 10.

Note that the simultaneous configuration of the NR CPP and the other NR positioning method in the terminal 20/base station 10 is an example. The NR CPP and the other NR positioning method may be configured in the terminal 20/base station 10 at different timings.

Configuration information of CPP provided as notification from the base station 10/LMF 30 to the terminal 20 may include, for example, an instruction (request) to perform CPP, resources of DL reference signals for measuring phases, and the like.

The configuration information of CPP provided as notification from the LMF 30 to the base station 10 may include, for example, an instruction (request) to perform CPP, resources of UL reference signals for measuring phases, and the like.

When the configuration information of CPP is received, the terminal 20/base station 10 may assume that information indicating a positioning method used for ambiguity resolution of CPP is provided as notification from the network/LMF 30.

Any method may be used as a method for the LMF 30 to determine the NR positioning method to be applied for CPP in the terminal 20/base station 10. For example, the determination may be made based on measurement quality or the like in the terminal 20/base station 10, as in the Embodiment 2 described later.

The operations of Embodiments 1 to 3 described below are operations in a case where CPP is configured (or requested) for the terminal 20/base station 10. However, the technique is not limited to this.

Next, Embodiment 1 will be described. The Embodiment 1 will be described separately as Embodiment 1-1 and Embodiment 1-2. The Embodiment 1-1 and the Embodiment 1-2 may be combined.

### (Embodiment 1-1)

First, Embodiment 1-1 will be described. In the Embodiment 1-1, the terminal 20 assumes that an NR positioning method to be applied for ambiguity resolution in NR CPP is signaled by RRC/MAC-CE/DCI/LPP.

### <DL CPP>

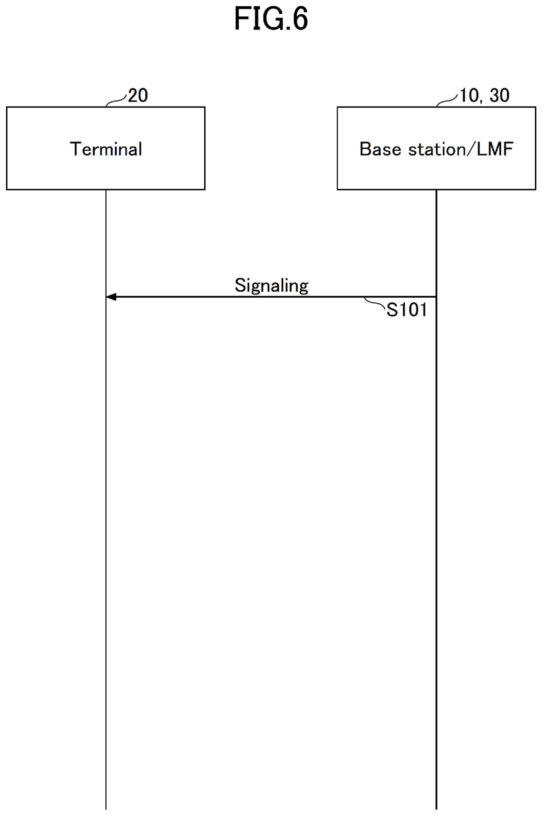

In the downlink CPP (DL CPP), the terminal 20 receives a reference signal to perform CPP. As illustrated in FIG. 6, in S101, the base station 10/LMF 30 notifies (signals) the terminal 20 of a DL positioning method to be applied in ambiguity resolution. The terminal 20 receives the DL positioning method. The signaling method is, for example, RRC/MAC-CE/DCI/LPP.

The terminal 20 that has received the DL positioning method in S101 calculates ambiguity resolution using the measured result of the DL-PRS resource (or DL-PRS resource set) corresponding to the DL positioning method. The terminal 20 may notify the LMF 30 of the measured result, and the LMF 30 may calculate the ambiguity resolution.

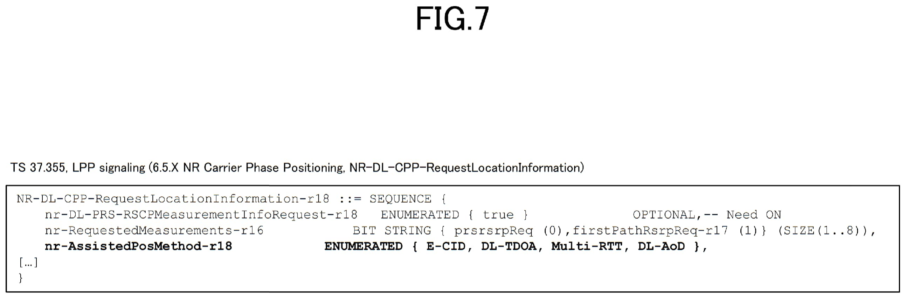

FIG. 7 shows an example of LPP signaling provided as notification from the LMF 30 to the terminal 20 (an example of a change from Non-Patent Document 1). In the example illustrated in FIG. 7, the DL positioning method to be applied in the ambiguity resolution is provided as notification by an information element of nr-AssistedPosMethod-r18.

### <UL CPP>

In the uplink CPP, the base station 10 receives a reference signal, for example, to execute CPP.

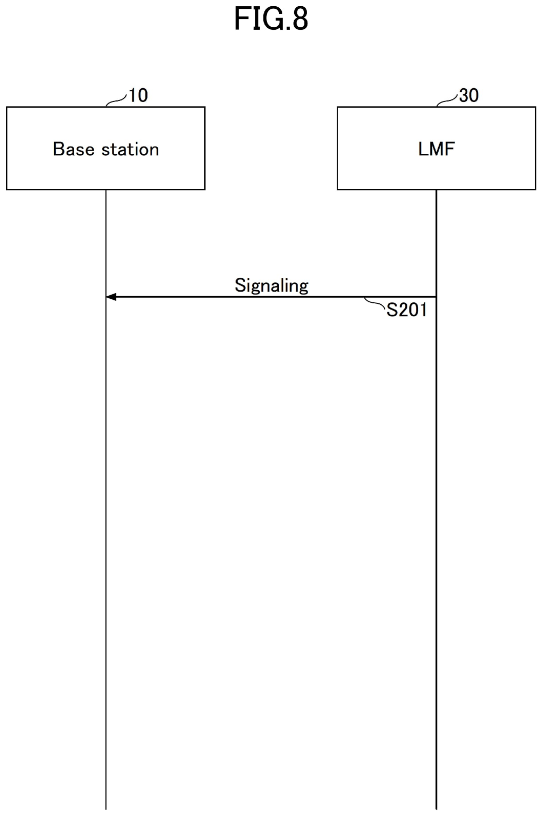

As illustrated in FIG. 8, in S201, the LMF 30 notifies the base station 10 of the UL positioning method to be applied in the ambiguity resolution. In this case, the base station 10 is requested (configured) to perform positioning measurement by CPP from the LMF 30. The request information (configuration information) includes the UL positioning method to be applied.

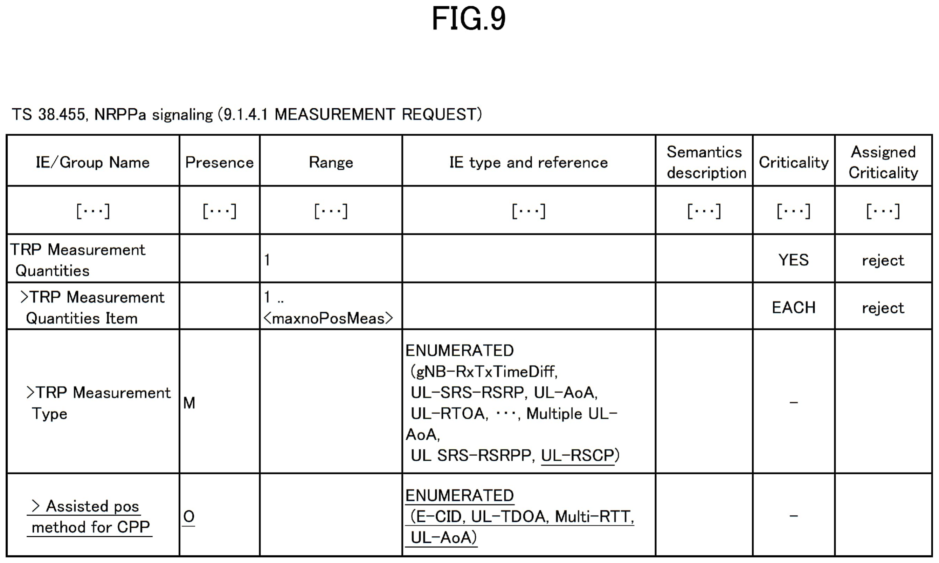

FIG. 9 illustrates an example of signaling provided as notification from the LMF 30 to the base station 10 (a modification example from Non-Patent Document 2). In the example illustrated in FIG. 9, the UL positioning method to be applied in the ambiguity resolution is provided as notification by an information element of Assisted pos method for CPP.

In a case that the NR positioning method to be combined with the NR CPP is not signaled in any of the DL CPP and the UL CPP, the terminal 20/base station 10 may assume that the NR CPP standalone positioning (standalone mode) is performed.

### (Embodiment 1-2)

Next, Embodiment 1-2 will be described. In the Embodiment 1-2, the terminal 20/base station 10 assumes that a measurement metric applied in ambiguity resolution of NR CPP is signaled by RRC/MAC-CE/DCI/LPP.

### <DL CPP>

In the downlink CPP (DL CPP), the terminal 20 receives a reference signal to execute CPP. As illustrated in FIG. 6, in S101, the base station 10/LMF 30 notifies (signals) the terminal 20 of a DL measurement metric to be applied in the ambiguity resolution. The terminal 20 receives the DL measurement metric. The signaling method is, for example, RRC/MAC-CE/DCI/LPP.

The terminal 20 that receives the DL measurement metric in S101 performs ambiguity resolution calculation using the measured result of the DL-PRS resource (or DL-PRS resource set) corresponding to the DL measurement metric. The terminal 20 may notify the LMF 30 of the measured results, and the LMF 30 may calculate the ambiguity resolution.

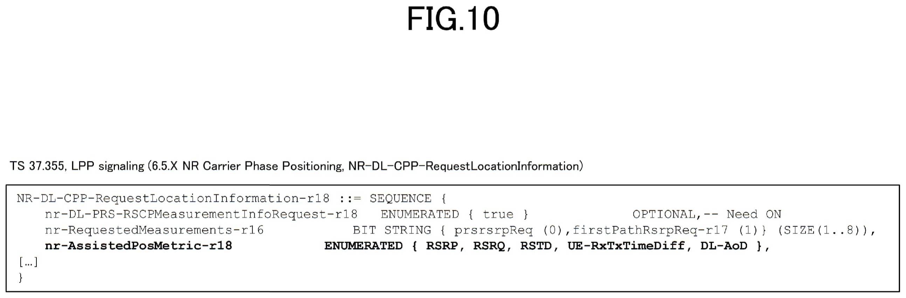

FIG. 10 shows an example of LPP signaling notified from the LMF 30 to the terminal 20 (an example of a change from Non-Patent Document 1). In the example illustrated in FIG. 10, a DL measurement metric to be applied in ambiguity resolution is provided as notification by an information element of nr-AssistedPosMetric-r18.

### <UL CPP>

In the uplink CPP, for example, the base station 10 receives a reference signal to perform CPP (carrier phase positioning).

As illustrated in FIG. 8, in S201, the LMF 30 notifies the base station 10 of a UL measurement metric to be applied in ambiguity resolution. In this case, the base station 10 is requested (configured) to perform positioning measurement by CPP from the LMF 30. The configuration information includes the UL measurement metric to be applied.

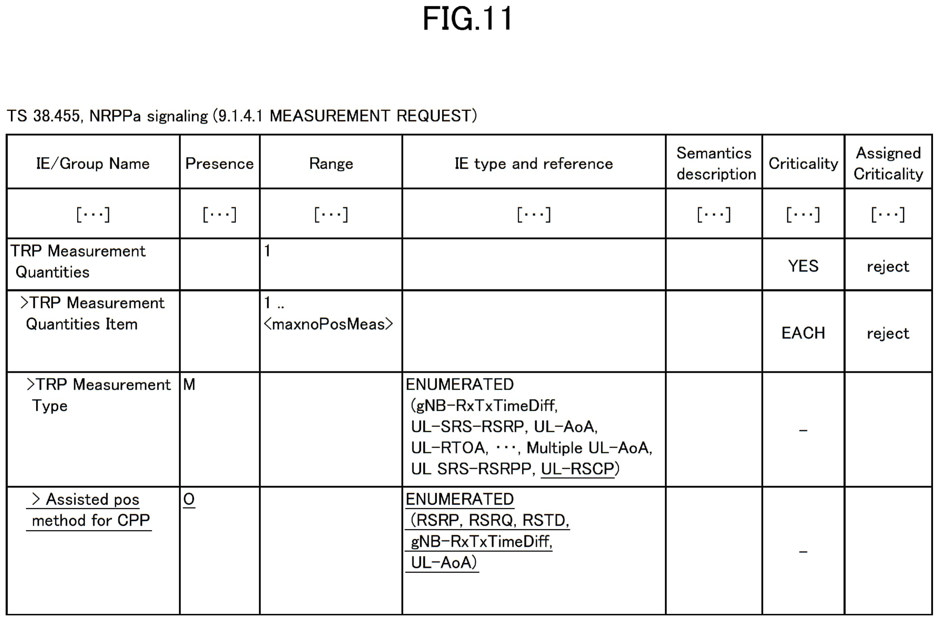

FIG. 11 illustrates an example of signaling notified from the LMF 30 to the base station 10 (a modification example from non-patent document 2). In the example illustrated in FIG. 11, a UL measurement metric to be applied in ambiguity resolution is provided as notification by an information element of Assisted pos method for CPP.

In a case that the measurement metric to be combined with the NR CPP is not signaled in any of the DL CPP and the UL CPP, the terminal 20/base station 10 may assume that the NR CPP standalone positioning (standalone mode) is performed.

### (Effects of First Embodiment)

With the technique of Embodiment 1, the LMF 30 which manages location information can, for example, reliably instruct (i.e., control) the terminal 20/base station 10 to apply a positioning method desired by the LMF 30.

### (Embodiment 2)

Next, Embodiment 2 will be described. In the Embodiment 2, it is assumed that the terminal 20/base station 10 determines an NR positioning method applied to ambiguity resolution of the NR CPP from assistance data. Embodiment 2 includes option 1 to option 3. Each option is described below.

### <Option 1>

In option 1, the terminal 20/base station 10 uses measurement quality of the NR positioning method as assistance data.

For example, for the DL CPP, the terminal 20 uses nr-TimingQuality-r16 as assistance data. The nr-TimingQuality-r16 is present for each NR positioning method using a timing value and is a measurement quality (a value indicating uncertainty of the timing value) in the terminal 20. The nr-quality-value is a value indicating a measured r16 of the UE 20. The nr-TimingQuality-r16 may be a value measured (estimated) by the terminal 20 or may be a value transmitted from the base station 10/LMF 30 to the terminal 20. Note that a parameter other than nr-TimingQuality-r16 may be used.

Regarding UL CPP, the base station 10 uses, for example, Measurement Quality as assistance data. Measurement Quality represents the measurement quality at the base station 10 (TRP) and, depending on the type of NR positioning method, can include timing-related Measurement Quality, angle-related Measurement Quality, and so on. Measurement Quality may be measured (or estimated) by the base station 10 itself, or it may be reported to the base station 10 by the terminal 20/LMF 30. A parameter other than Measurement Quality may also be employed.

Next, a specific example will be described. Here, it is assumed that, the smaller the value of nr-TimingQuality-r16, the better the quality is. For example, the terminal 20 applies an NR positioning method in which nr-TimingQuality-r16 is equal to or less than (or just less than) a value X to the ambiguity resolution of the DL NR CPP. The terminal 20 may apply an NR positioning method in which nr-TimingQuality-r16 is a specific value Y to the ambiguity resolution of the DL NR CPP. The terminal 20 may apply an NR positioning method having the smallest value of nr-TimingQuality-r16 to the ambiguity resolution of the DL NR CPP.

In addition, here, it is assumed that the smaller the value of Measurement Quality, the better the quality is. For example, the base station 10 applies an NR positioning method in which Measurement Quality is equal to or less than (or just less than) the threshold X to the ambiguity resolution of the UL NR CPP. The base station 10 may apply an NR positioning method in which Measurement Quality is a specific value Y to the ambiguity resolution of the UL NR CPP. The terminal 20 may apply an NR positioning method with the smallest value of Measurement Quality to the ambiguity resolution of the UL NR CPP.

The values X and Y described above may be uniquely defined in a technical specification, or may be configured from the network/LMF 30 to the terminal 20/base station 10.

### <Option 2>

In option 2, the terminal 20/base station 10 uses a margin of Timing Error Group (TEG) as assistance data. The Timing Error Group (TEG) is a group of multiple timing errors of transmission or reception within a certain margin. Examples of the Timing Error Group (TEG) include a TRP Tx TEG, a UE Rx TEG, a UE RxTx TEG, and a UE Tx TEG (Non-Patent Document 1).

The margin of the Timing Error Group (TEG) can be obtained, for example, from TEG TimingErrorMargin r17 or RxTxTEG TimingErrorMargin r17.

The TEG-TimingErrorMargin-r17 is provided for each NR positioning method using a timing value, and is defined as "The IE TEG-TimingErrorMargin defines the timing error margin values of the UE Rx TEGs, UE Tx TEGs, or TRP Tx TEGs.". in Non-Patent Document 1, for example.

The RxTxTEG-TimingErrorMargin-r17 is provided for each NR positioning method using a timing value, and is defined as "The IE RxTxTEG-TimingErrorMargin defines the timing error margin values of the UE RxTx TEGs.". in Non-Patent Document 1, for example.

The TEG-TimingErrorMargin-r17/RxTxTEG-TimingErrorMargin-r17 may be a value measured (estimated) by the terminal 20 or may be a value measured (estimated) by the base station 10. The TEG-TimingErrorMargin-r17/RxTxTEG-TimingErrorMargin-r17 may be provided as notification from the base station 10/LMF 30 to the terminal 20 or may be provided as notification from the terminal 20 to the base station 10/LMF 30.

As a parameter representing a margin of the Timing Error Group (TEG), a parameter other than TEG-TimingErrorMargin-r17/RxTxTEG-TimingErrorMargin-r17 may be used. Hereinafter, a specific example will be described, but in the following, parameters representing the margin of the Timing Error Group (TEG) are collectively referred to as a "timing error margin".

Here, it is assumed that the smaller the value of the timing error margin, the better the quality is. For example, the terminal 20 applies an NR positioning method in which the timing error margin is equal to or less than (or just less than) the threshold X to the ambiguity resolution of the DL NR CPP. The terminal 20 may apply an NR positioning method in which the timing error margin is a specific value Y to the ambiguity resolution of the DL NR CPP. The terminal 20 may apply an NR positioning method with the smallest value of the timing error margin to the ambiguity resolution of the DL NR CPP.

In addition, for example, the base station 10 applies the NR positioning method in which the timing error margin is equal to or less than (or just less than) the threshold X to the ambiguity resolution of the UL NR CPP. The base station 10 may apply the NR positioning method in which the timing error margin is a specific value Y to the ambiguity resolution of the UL NR CPP. The base station 10 may apply the NR positioning method with the smallest value of the timing error margin to the ambiguity resolution of the UL NR CPP.

The values X and Y described above may be uniquely defined in a technical specification, or may be configured from the network/LMF 30 to the terminal 20/base station 10.

### <Option 3>

In option 3, the terminal 20/base station 10 uses priority info. (priority information) as assistance data. The priority info. is assumed to be present for each NR positioning method. The priority info. indicates a priority of the corresponding NR positioning method.

The priority info. for each NR positioning method may be provided as notification from the base station 10/LMF 30 to the terminal 20. The priority info. for each NR positioning method may be notified from the LMF 30 to the base station 10.

The NR positioning method with the highest priority may be notified to the terminal 20 by the base station 10/LMF 30. The NR positioning method with the highest priority may be notified to the base station 10 by the LMF 30.

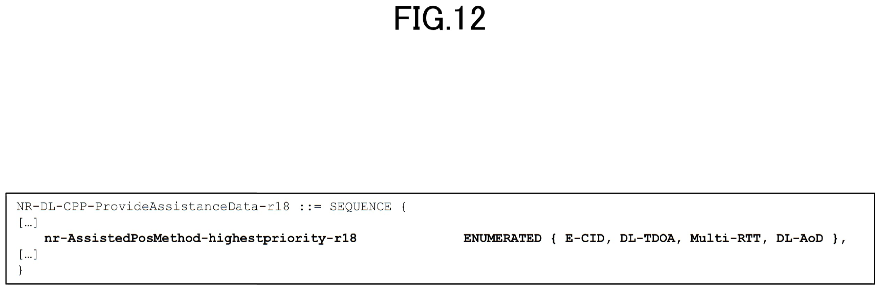

FIG. 12 illustrates an example of information indicating the NR positioning method with the highest priority, which is provided as notification from the base station 10/LMF 30 to the terminal 20 or provided as notification from the LMF 30 to the base station 10.

For example, when two or more NR positioning methods are configured from the base station 10/LMF 30, the terminal 20 applies a method having the highest priority among the two or more NR positioning methods to the ambiguity resolution of the DL NR CPP.

For example, when two or more NR positioning methods are configured from the LMF 30, the base station 10 applies a method having the highest priority among the two or more NR positioning methods to the ambiguity resolution of the UL NR CPP.

### (Effects of Embodiment 2)

In the technique according to the Embodiment 2, since assistance data is used for determination of an NR positioning method, it is possible to prevent an increase in overhead of signaling necessary for an instruction from the LMF30/base station 10 to the terminal 20 or an increase in overhead of signaling necessary for an instruction from the LMF 30 to the base station 10.

### (Embodiment 3)

Next, Embodiment 3 will be described. In the Embodiment 3, it is assumed that the terminal 20 requests assistance data necessary for ambiguity resolution of the NR CPP from the network. The request may be made to the LMF 30 or the base station 10.

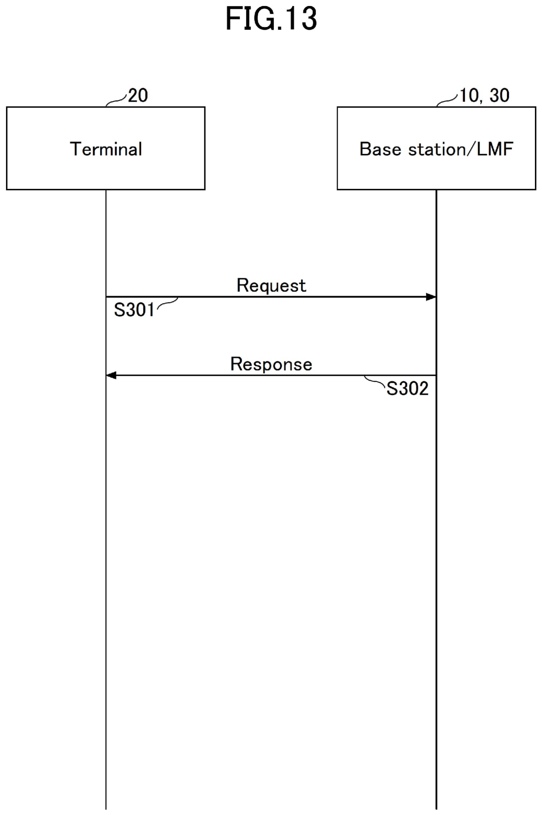

As shown in FIG. 13, in S301, the terminal 20 transmits to the base station 10/LMF 30 a request for assistance data for a particular NR positioning method. Upon receiving the request, in S302, the base station 10/LMF 30 transmits, in response, the assistance data for the NR positioning method to the terminal 20. The terminal 20 receives the assistance data.

For example, the terminal 20 applies the NR positioning method, which is the target of the request for the assistance data, to the ambiguity resolution of the DL NR CPP.

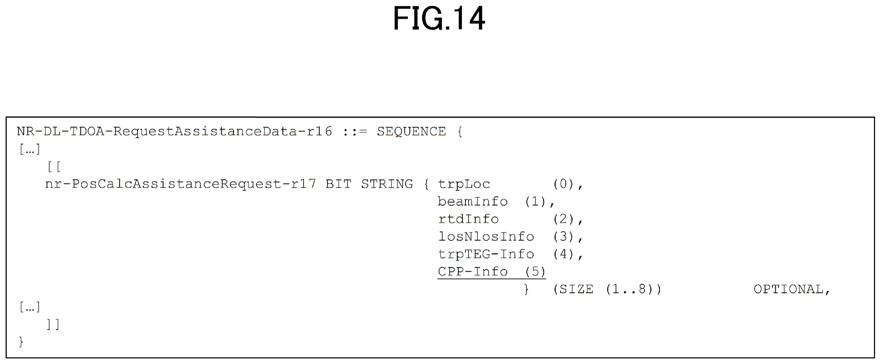

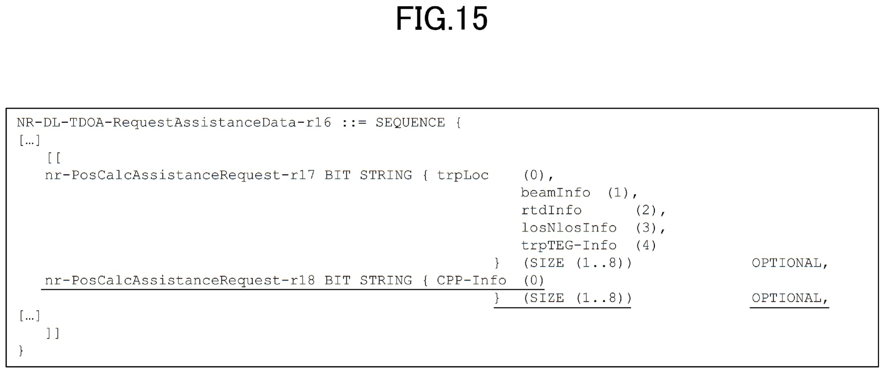

Examples of request messages for assistance data transmitted from the terminal 20 to the LMF 30 by LPP signaling (examples of changes from Non-Patent Document 1) are shown in FIGS. 14 and 15. These show examples of applying DL-TDOA to ambiguity resolution.

The example of FIG. 14 is an example of reusing nr-PosCalcAssistanceRequest-r17. However, CPP-Info is added. The CPP-Info includes, for example, an assumed wave number (N) range or position information of a positioning reference unit (PRU).

The example of FIG. 15 is an example of adding nr-PosCalcAssistanceRequest-r18. The CPP-Info in FIG. 15 includes, for example, an assumed wave number (N) range, position information of a positioning reference unit (PRU), or the like.

The NR positioning method(s) for which the terminal 20 requests assistance data may be a single method or multiple methods (e.g., DL-TDOA and DL-AoD).

In addition, in a case where assistance data satisfying a predetermined condition is notified from the NW (base stations 10/LMF 30) to the terminal 20 as for an NR positioning method, the terminal 20 may apply the NR positioning method to ambiguity resolution.

For example, the above condition is assumed to be "PRU position information is present in CPP-Info". In this case, in assistance data of a certain NR positioning method, if PRU position information is present in CPP-Info, the terminal 20 can apply the NR positioning method to ambiguity resolution.

Additionally, for example, the above condition may be that "LOS probability in losNlosInfo is equal to or greater than Z". In this case, if, in the assistance data for a certain NR positioning method, the LOS probability in losNlosInfo is equal to or greater than Z, the terminal 20 may apply that NR positioning method to ambiguity resolution. Note that losNlosInfo is information indicating the line-of-sight state between a transmission point and a reception point, where "los" indicates the presence of a line of sight and "Nlos" indicates the absence of a line of sight.

The above condition may be "the NLOS probability in the losNlosInfo is equal to or less than Z". In this case, in assistance data of a certain NR positioning method, if the NLOS probability in losNlosInfo is equal to or less than (or just less than) Z, the terminal 20 can apply the NR positioning method to ambiguity resolution.

The above-described value Z may be uniquely defined in technical specifications, or may be configured from the base station 10/LMF 30 to the terminal 20.

The above-described operation may be applied to the base station 10. Specifically, the following is performed. Note that the assistance data may be referred to by another name.

It is assumed that the base station 10 requests assistance data necessary for ambiguity resolution of the NR CPP from the LMF 30.

For example, the base station 10 transmits a request for assistance data for a certain NR positioning method to the LMF 30. The LMF 30 that has received the request transmits assistance data for the NR positioning method to the base station 10 as a response. The base station 10 receives the assistance data.

For example, the base station 10 applies the NR positioning method, which is a target of the request for the assistance data, to ambiguity resolution of the UL NR CPP.

The NR positioning method that is a target of the request for the assistance data by the base station 10 may be a single method or multiple methods.

In addition, in a case where assistance data satisfying a predetermined condition is notified from the LMF 30 to the base station 10 for a certain NR positioning method, the base stations 10 may apply the NR positioning method to ambiguity resolution.

### (Effects of Technology According to Embodiment 3)

According to the Embodiment 3, after receiving the assistance data, the terminal 20/the base station 10 can determine whether to apply the assistance data to ambiguity resolution, and the degree of freedom of the operation of the terminal 20/the base station 10 can be secured.

### (Embodiment 4)

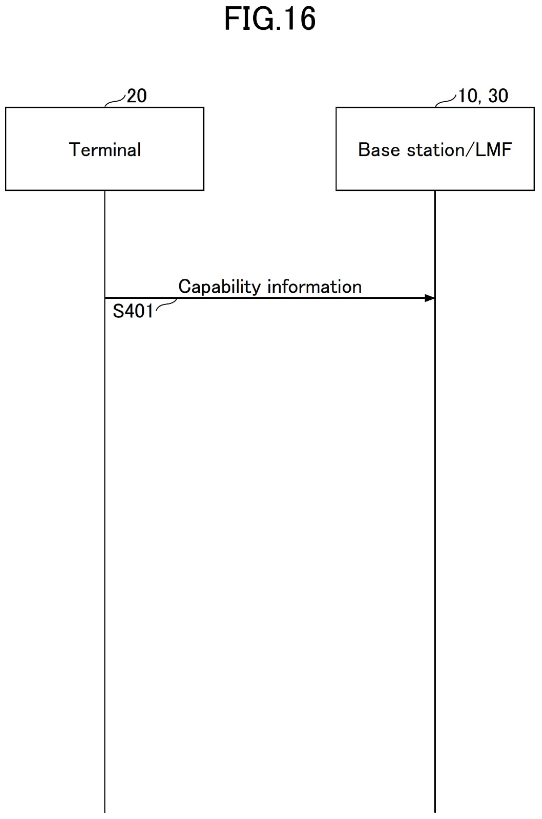

Next, Embodiment 4 will be described. In the Embodiment 4, as illustrated in S401 of FIG. 16, the terminal 20 reports a capability (capability information) of the terminal 20 regarding the NR CPP ambiguity resolution to the network (the base station 10/LMF 30).

The capability includes, for example, any one or any plurality of the following (1) to (3) .

(1) Whether or not NR CPP is supported
(2) NR CPP mode to be supported
(3) Legacy positioning method that can be used for NR CPP ambiguity resolution

Among the above, the NR CPP mode of (2) may include one or both of the following (2-1) and (2-2).

### (2-1)

### •Non-standalone mode/standalone mode

In the non-standalone mode, the legacy positioning method is used for ambiguity resolution. In the standalone mode, the legacy positioning method is not used for ambiguity resolution.

### (2-2)

### •UE-based/UE-assisted/NW-based

In addition, (3) may specifically include any one or more of the following pieces of information.

### •E-CID, DL-TDOA, Multi-RTT, DL-AoD, UL-TDOA, UL-AoA

In addition, as a variation of (3), the terminal 20 may report the legacy positioning method that can be used for the NR CPP ambiguity resolution with the measurement metric. For example, one or more of RSRP, RSRQ, RSTD, UE RxTxTimeDiff, and DL-AoD may be reported.

Additionally, the base station 10 may report to the LMF 30 the base station's capability (capability information) related to NR CPP ambiguity resolution. This capability information may be referred to by a name other than "capability". The capability may include, for example, any one or more of the items (1)-(3) below.

(1) Whether or not NR CPP is supported
(2) NR CPP mode to be supported
(3) Legacy positioning method that can be used for NR CPP ambiguity resolution

### (Effects of Embodiment 4)

According to the Embodiment 4, the base station 10/LMF 30 can grasp capability on CPP of the terminal 20. In addition, the LM F30 can grasp capability on CPP of the base station 10. In addition, appropriate NR CPP ambiguity resolution according to the capability of the terminal 20/base station 10 becomes possible.

### (Other Examples)

Hereinafter, examples applicable to any of the Embodiments 0 to 4 will be described.

"Signaling" (signaling) may be read as "configure with RRC", "activate/deactivate/update with MAC-CE", "indicate with DCI", "configure with LPP", "request with NRPPa", or the like.

Furthermore, "Carrier Phase Positioning (CPP)" may be read as "Carrier Phase Measurement (CPM)", "Phase-based positioning", or the like.

In addition, "ambiguity resolution" may be read as "integer ambiguity resolution", "wave-number detection", or the like.

### (Apparatus Configuration)

Next, an example of a functional configuration of the base station 10 and the terminal 20 that execute the processes and operations described above will be described. The base station 10 and the terminal 20 include functions for implementing all the embodiments described above. However, each of the base station 10 and the terminal 20 may instead include only the function of any one of all the embodiments.

### <Base Station 10>

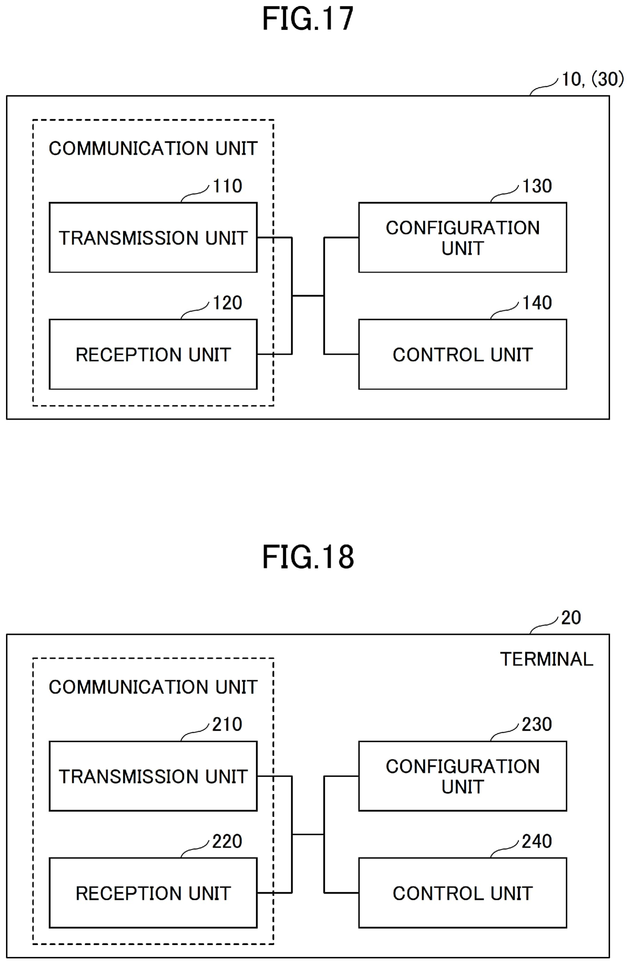

FIG. 17 is a diagram illustrating an example of a functional configuration of the base station 10. As illustrated in FIG. 17, the base station 10 includes a transmission unit 110, a reception unit 120, a configuration unit 130, and a control unit 140. The functional configuration illustrated in FIG. 17 is merely an example. The functional division and the name of the functional unit may be any division and name as long as the operation according to the embodiment of the present invention can be executed. The transmission unit 110 and the reception unit 120 may be collectively referred to as a communication unit.

The transmission unit 110 includes a function of generating a signal to be transmitted to the terminal 20 side and transmitting the signal by radio. The transmission unit 110 may also transmit signals to a network apparatus, such as the LMF 30. The reception unit 120 includes a function of receiving various signals transmitted from the terminal 20 and acquiring, for example, information of a higher layer from the received signal. The reception unit 120 may receive a signal from a network apparatus such as the LMF 30. The transmission unit 110 has a function of transmitting the NR-PSS, the NR-SSS, the NR-PBCH, the DL/UL control signal, the DCI by the PDCCH, the data by the PDSCH, and the like to the terminal 20.

The configuration unit 130 stores configuration information configured in advance and various types of configuration information to be transmitted to the terminal 20 in a storage device included in the configuration unit 130, and reads the configuration information from the storage device as necessary.

The control unit 140 schedules DL reception or UL transmission of the terminal 20 via the transmission unit 110. The functional unit related to signal transmission in the control unit 140 may be included in the transmission unit 110, and the functional unit related to signal reception in the control unit 140 may be included in the reception unit 120.

The LMF 30 may also have the configuration shown in FIG. 10. In a case where the configuration illustrated in FIG. 17 is the LMF, the transmission unit 110 transmits a signal to another network apparatus (including a base station), and the reception unit 120 receives a signal from another network apparatus (including a base station).

### <Terminal 20>

FIG. 18 is a diagram illustrating an example of a functional configuration of the terminal 20. As illustrated in FIG. 18, the terminal 20 includes a transmission unit 210, a reception unit 220, a configuration unit 230, and a control unit 240. The functional configuration illustrated in FIG. 18 is merely an example. The functional division and the name of the functional unit may be any division and name as long as the operation according to the embodiment of the present invention can be executed. The transmission unit 210 and the reception unit 220 may be collectively referred to as a communication unit.

The transmission unit 210 generates a transmission signal from transmission data and transmits the transmission signal by radio. The reception unit 220 receives various signals by radio and acquires a signal of a higher layer from the received signal of the physical layer. The reception unit 220 has a function of receiving the NR-PSS, the NR-SSS, the NR-PBCH, the DL/UL/SL control signal, the DCI by the PDCCH, the data by the PDSCH, and the like transmitted from the base station 10. In addition, for example, the transmission unit 210 may transmit a physical sidelink control channel (PSCCH), a physical sidelink shared channel (PSSCH), a physical sidelink discovery channel (PSDCH), a physical sidelink broadcast channel (PSBCH), or the like to the other terminals 20 as D2D communication, and the reception unit 220 may receive the PSCCH, the PSSCH, the PSDCH, the PSBCH, or the like from the other terminals 20.

The configuration unit 230 stores various types of configuration information received from the base station 10 or another terminal by the reception unit 220 in a storage device included in the configuration unit 230, and reads the configuration information from the storage device as necessary. The configuration unit 230 also stores configuration information that is configured in advance.

The control unit 240 controls the terminal 20. The functional unit related to signal transmission in the control unit 240 may be included in the transmission unit 210, and the functional unit related to signal reception in the control unit 240 may be included in the reception unit 220. The transmission unit 210 may be referred to as a transmitter, and the reception unit 220 may be referred to as a receiver. The phase measurement may be performed by the reception unit 220 or the control unit 240.

In the present specification, at least matters described in the following Supplementary Notes 1 and 2 are disclosed.

### <Supplementary Note 1>

### [Clause 1]

A terminal including:
a reception unit configured to receive configuration information for carrier phase positioning from a network; and
a control unit configured to assume that, in carrier phase positioning, information indicating a positioning method to be used for determining a wave number is notified from the network.

### [Clause 2]

The terminal as described in Clause 1, wherein the reception unit receives, as the information indicating the positioning method, either information on the positioning method itself or a measurement metric from the network.

### [Clause 3]

A base station including:
a reception unit configured to receive configuration information for carrier phase positioning from a management apparatus; and
a control unit configured to assume that, in carrier phase positioning, information indicating a positioning method to be used for determining a wave number is notified from the management apparatus.

### [Clause 4]

The base station as described in Clause 3, wherein the reception unit receives, as the information indicating the positioning method, either information on the positioning method itself or a measurement metric from the management apparatus.

### [Clause 5]

A management apparatus including:
a control unit configured to determine, for a terminal or a base station, a positioning method to be used for determining a wave number in carrier phase positioning; and
a transmission unit configured to notify the terminal or the base station of information indicating the positioning method.

### [Clause 6]

A communication method executed by a terminal, the communication method including:
receiving, from a network, configuration information for carrier phase positioning; and
assuming, in carrier phase positioning, that information indicating a positioning method to be used for determining a wave number is notified from the network.

By virtue of any of the configurations described in any of the foregoing Clauses, it becomes possible to apply an appropriate positioning method to ambiguity resolution in carrier phase positioning. According to Clauses 2 and 4, as the information indicating the positioning method, either information on the positioning method itself or a measurement metric can be used.

### <Supplementary Note 2>

### [Clause 1]

A terminal including:
a reception unit configured to receive configuration information for carrier phase positioning from a network; and
a control unit configured to determine, in carrier phase positioning, a positioning method to be used for wave number determination based on assistance data or a request for assistance data.

### [Clause 2]

The terminal as described in Clause 1, wherein the control unit uses, as the assistance data, measurement quality, a margin of a timing error group, or priority.

### [Clause 3]

The terminal as described in Clause 1, wherein, when assistance data satisfying a condition is received from a network, the control unit uses, for wave number determination, a positioning method corresponding to the assistance data.

### [Clause 4]

A base station including:
a reception unit configured to receive configuration information for carrier phase positioning from a management apparatus; and
a control unit configured to determine, in carrier phase positioning, a positioning method to be used for wave number determination based on assistance data or a request for assistance data.

### [Clause 5]

A communication method executed by a terminal, the communication method including:
receiving configuration information for carrier phase positioning from a network; and
in carrier phase positioning, determining a positioning method to be used for wave number determination based on assistance data or a request for assistance data.

### [Clause 6]

A communication method executed by a base station, the communication method comprising:
receiving configuration information for carrier phase positioning from a management apparatus; and
in carrier phase positioning, determining a positioning method to be used for wave number determination based on assistance data or a request for assistance data.

By virtue of any of the configurations described in any of the foregoing Clauses, it becomes possible to apply an appropriate positioning method to ambiguity resolution in carrier phase positioning. According to Clause 2, measurement quality, timing error group margin, or priority may be used as assistance data. According to Clause 3, a determination may be made in accordance with conditions.

### (Hardware Configuration)

The block diagrams (FIGs. 17 and 18) used in the description of the embodiment described above illustrate the block of functional units. Such functional blocks (configuration parts) are attained by at least one arbitrary combination of hardware and software. In addition, an attainment method of each of the function blocks is not particularly limited. That is, each of the function blocks may be attained by using one apparatus that is physically or logically coupled, by directly or indirectly (for example, in a wired manner, over the radio, or the like) connecting two or more apparatuses that are physically or logically separated and by using such a plurality of apparatuses. The function block may be attained by combining one apparatus described above or a plurality of apparatuses described above with software.

The function includes determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a configuration part) that functions to transmit is referred to as the transmitting unit or the transmitter. As described above, the attainment method thereof is not particularly limited.

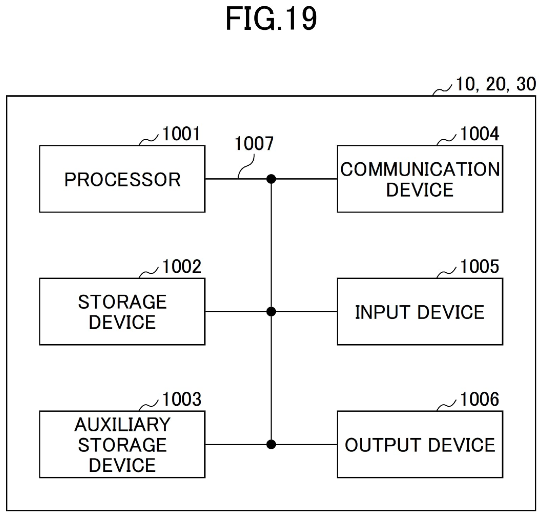

For example, the base station 10, the terminal 20 and the like in one embodiment of this disclosure may function as a computer for performing the processing of a radio communication method of this disclosure. FIG. 19 is a diagram illustrating an example of a hardware configuration of the base station 10 and the terminal 20 and the LMF 30 according to one embodiment of this disclosure. The base station 10 and the terminal 20 described above may be physically configured as a computer apparatus including a processor 1001, a storage device 1002, an auxiliary storage device 1003, a communication device 1004, an input device 1005, an output device 1006, a bus 1007, and the like.

Note that, in the following description, the word "apparatus" can be replaced with a circuit, a device, a unit, or the like. The hardware configuration of the base station 10 and the terminal 20 and the LMF 30 may be configured to include one or a plurality of apparatuses illustrated in the drawings, or may be configured not to include a part of the apparatuses.

Each function of the base station 10 and the terminal 20 is attained by reading predetermined software (a program) on hardware such as the processor 1001 and the storage device 1002 such that the processor 1001 performs an operation, and by controlling the communication of the communication device 1004 or by controlling at least one of reading and writing of data in the storage device 1002 and the auxiliary storage device 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 240, or the like, described above, may be attained by the processor 1001.

In addition, the processor 1001 reads out a program (a program code), a software module, data, and the like to the storage device 1002 from at least one of the auxiliary storage device 1003 and the communication device 1004, and thus, executes various processing. A program for allowing a computer to execute at least a part of the operation described in the embodiment described above is used as the program. The control unit 140 of the base station 10 may be attained by a control program that is stored in the storage device 1002 and is operated by the processor 1001. Also, for example, the control unit 240 of the terminal 20 may be attained by a control program that is stored in the storage device 1002 and is operated by the processor 1001. It has been described that the various processing described above are executed by one processor 1001, but the various processing may be simultaneously or sequentially executed by two or more processors 1001. The processor 1001 may be mounted on one or more chips. Note that, the program may be transmitted from a network through an electric communication line.

The storage device 1002 is a computer readable recording medium, and for example, may be configured of at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (a main storage unit), and the like. The storage device 1002 is capable of retaining a program (a program code), a software module, and the like that can be executed in order to implement a communication method according to one embodiment of this disclosure.

The auxiliary storage device 1003 is a computer readable recording medium, and for example, may be configured of at least one of an optical disk such as a compact disc ROM (CD-ROM), a hard disk drive, a flexible disk, a magnetooptical disk (for example, a compact disc, a digital versatile disk, and a Blu-ray (Registered Trademark) disc), a smart card, a flash memory (for example, a card, a stick, a key drive), a floppy (Registered Trademark) disk, a magnetic strip, and the like. The storage medium described above, for example, may be a database including at least one of the storage device 1002 and the auxiliary storage device 1003, a server, and a suitable medium.

The communication device 1004 is hardware (a transmitting and receiving device) for performing communication with respect to the computer through at least one of a wire network and a radio network, and for example, is also referred to as a network device, a network controller, a network card, a communication module, and the like. The communication device 1004, for example, may be configured by including a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and receiving unit, a transmission path interface, and the like may be attained by the communication device 1004. In the transmitting and receiving unit, the transmitting unit and the receiving unit are mounted by being physically or logically separated.

The input device 1005 is an input device for receiving input from the outside (for example, a keyboard, a mouse, a microphone, a switch, a button, a sensor, and the like). The output device 1006 is an output device for implementing output with respect to the outside (for example, a display, a speaker, an LED lamp, and the like). Note that, the input device 1005 and the output device 1006 may be integrally configured (for example, a touch panel).

In addition, each of the apparatuses such as the processor 1001 and the storage device 1002 may be connected by the bus 1007 for performing communication with respect to information. The bus 1007 may be configured by using a single bus, or may be configured by using buses different for each of the apparatuses.

In addition, the base station 10 and the terminal 20 and the LMF 30 may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be mounted by using at least one of the hardware.

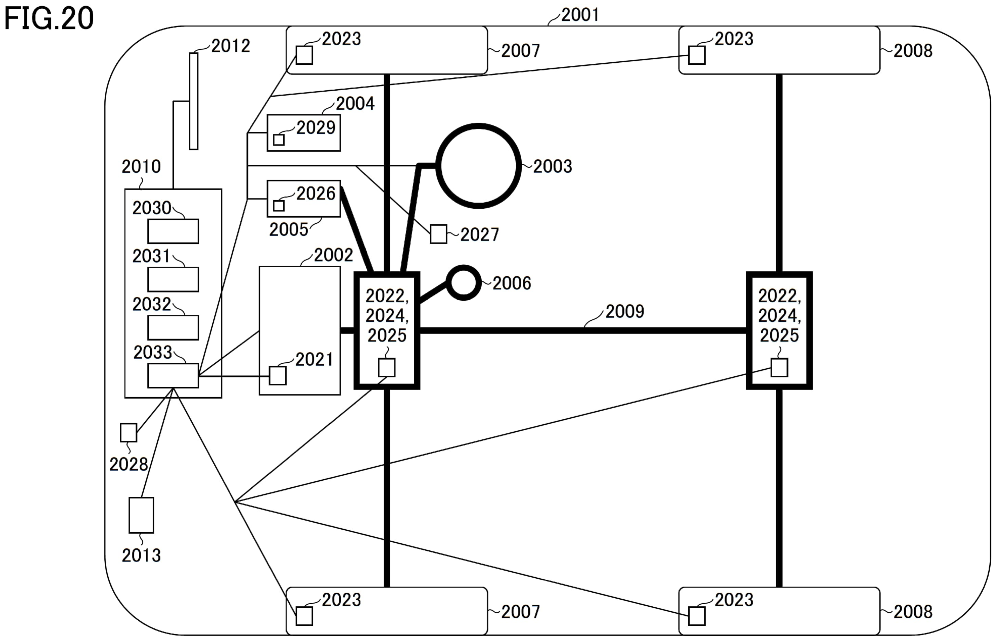

The terminal 20 or the base station 10 or the LMF 30 may be provided in a vehicle. FIG. 20 shows a configuration example of a vehicle 2001 according to the present embodiment. As shown in FIG. 20, the vehicle 2001 includes a drive unit 2002, a steering unit 2003, an accelerator pedal 2004, a brake pedal 2005, a shift lever 2006, front wheels 2007, rear wheels 2008, an axle 2009, an electronic control unit 2010, various sensors 2021-2029, an information service unit 2012, and a communication module 2013. The terminal 20 or the base station 10 in each aspect/embodiment described in the present disclosure may be applied to a communication apparatus mounted on the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by the object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, or the like) that receives an input from the outside, and may include an output device (for example, a display, a speaker, an LED lamp, a touch panel, or the like) that performs an output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via the communication port 2033, to and from the drive unit 2002, the steering unit 2003, the accelerator pedal 2004, the brake pedal 2005, the shift lever 2006, the front wheels 2007, the rear wheels 2008, the axle 2009, the microprocessor 2031 and the memory (ROM, RAM) 2032 in the electronic control unit 2010, and sensors 2021-2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of signals from the various sensors 2021 to 2028 described above input to the electronic control unit 2010, information obtained based on the signals, and information based on input from the outside (user) obtained via the information service unit 2012 to an external device via radio communication. The electronic control unit 2010, the various sensors 2021 to 2028, the information service unit 2012, and the like may be referred to as an input unit that receives an input. For example, PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to a device such as a display or a speaker based on PDSCH (or data/information decoded from the PDSCH) received by the communication module 2013). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheels 2007, the rear wheels 2008, the axle 2009, the sensors 2021-2029, etc., mounted in the vehicle 2001.

### (Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction). A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the base station 10 and the terminal 20 and the LMF 30 have been described by using a functional block diagram, but such an apparatus may be attained by hardware, software, or a combination thereof. Each of software that is operated by a processor of the base station 10 according to the embodiment of the invention and software that is operated by a processor of the terminal 20 according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiment described in this disclosure may be applied to a system using long term evolution (LTE), LTE-advanced (LTE-A), SUPER 3G, IMT-advanced, a 4th generation mobile communication system (4G), a 5th generation mobile communication system (5G), a 6th generation mobile communication system (6G), an xth generation mobile communication system (xG) (x is an integer or a decimal for example), future radio access (FRA), new radio (NR), New radio access (NX), Future generation radio access (FX), W-CDMA (Registered Trademark), GSM (Registered Trademark), CDMA2000, an ultra mobile broadband (UMB), IEEE 802.11 (Wi-Fi (Registered Trademark)), IEEE 802.16 (WiMAX (Registered Trademark)), IEEE 802.20, an ultra-wideband (UWB), Bluetooth (Registered Trademark), and other suitable systems and a next-generation system that is expanded, modified, created, or defined on the basis thereof. In addition, a combination of a plurality of systems (for example, a combination of 5G and at least one of LTE and LTE-A, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

Here, a specific operation that is performed by the base station 10 may be performed by an upper node, in accordance with a case. In a network provided with one or a plurality of network nodes including the base station 10, it is obvious that various operations that are performed in order for communication with respect to the terminal 20 can be performed by at least one of the base station 10 and network nodes other than the base station 10 (for example, MME, S-GW, or the like is considered as the network node, but the network node is not limited thereto). In the above description, a case is exemplified in which the number of network nodes other than the base station 10 is 1, but a plurality of other network nodes may be combined (for example, the MME and the S-GW).

The information, the signal, or the like described in this disclosure can be output to a lower layer (or the higher layer) from the higher layer (or the lower layer). The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed by a value represented by 1 bit (0 or 1), may be performed by a truth-value (Boolean: true or false), or may be performed by a numerical comparison (for example, a comparison with a predetermined value).

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), and at least one of the wire technology and the radio technology is included in the definition of the transmission medium.

The information, the signal, and the like described in this disclosure may be represented by using any of various different technologies. For example, the data, the command, the information, the signal, the bit, the symbol, the chip, and the like that can be referred to through the entire description above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling). In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding piece of information. For example, a radio resource may be indicated by an index.

The names used in the parameters described above are not a limited name in any respect. Further, expressions or the like using such parameters may be different from those explicitly disclosed in this disclosure. Various channels (for example, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macro-cell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In the present disclosure, the transmission of information from the base station to the terminal may be read as the base station instructing the terminal to perform control and operation based on the information.

In this disclosure, the terms "mobile station (MS)", "user terminal", "user equipment (UE)", and "terminal" can be interchangeably used.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other suitable terms, by a person skilled in the art.

At least one of the base station and the mobile station may be referred to as a transmission device, a reception device, a communication device, or the like. At least one of the base station and the mobile station may be a device mounted on a mobile object, the mobile object itself, or the like. The mobile object is a movable object, and the moving speed is arbitrary. The moving object may be stopped. Examples of the moving object include, but are not limited to, vehicles, transportation vehicles, automobiles, motorcycles, bicycles, connected cars, excavators, bulldozers, wheel loaders, dump trucks, forklifts, trains, buses, rear cars, rickshaws, ships and other watercraft, airplanes, rockets, artificial satellites, drones, multi-copters, quadcopters, balloons, and objects mounted thereon. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station and the mobile station also includes an apparatus that is not necessarily moved at the time of a communication operation. For example, at least one of the base station and the mobile station may be an internet of things (IoT) device such as a sensor.

In addition, the base station in this disclosure may be replaced with the terminal. For example, each aspect/embodiment of this disclosure may be applied to a configuration in which communication between the base station and the user terminal is replaced with communication in a plurality of terminals 20 (for example, may be referred to as device-to-device (D2D), vehicle-to-everything (V2X), and the like). In this case, the function of the base station 10 described above may be provided in the terminal 20. In addition, the words "uplink", "downlink", and the like may be replaced with words corresponding to the communication between the terminals (for example, "side"). For example, an uplink channel, a downlink channel, and the like may be replaced with a side channel.

Similarly, the user terminal in this disclosure may be replaced with the base station. In this case, the function of the user terminal described above may be provided in the base station.

The terms "determining" used in this disclosure may involve diverse operations. "Determining", for example, may include deeming judging, calculating, computing, processing, deriving, investigating, looking up (search, inquiry) (for example, looking up in a table, a database, or another data structure), and ascertaining, as "determining". In addition, "determining" may include deeming receiving (for example, receiving information), transmitting (for example, transmitting information), input, output, and accessing (for example, accessing data in a memory), as "determining". In addition, "determining" may include deeming resolving, selecting, choosing, establishing, comparing, and the like as "determining". That is, "determining" may include deeming an operation as "determining". In addition, "determining" may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical or logical, or may be a combination thereof. For example, the "connection" may be replaced with "access". In the case of being used in this disclosure, it is possible to consider that two elements are "connected" or "coupled" to each other by using at least one of one or more electric wires, cables, and print electric connection, and as some non-limiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot based on a standard to be applied.

The description "based on" that is used in this disclosure does not indicate only "based on only", unless otherwise specified. In other words, the description "based on" indicates both "based on only" and "based on at least".

Any reference to elements using the designations "first", "second", and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or that the first element necessarily precedes the second element in any manner.

"Means" in the configuration of each of the apparatuses described above may be replaced with "unit", "circuit", "device", and the like.

In this disclosure, in a case where "include", "including", and the modification thereof are used, such terms are intended to be inclusive, as with the term "comprising". Further, the term "or" that is used in this disclosure is not intended to be exclusive-OR.

A radio frame may be configured of one or a plurality of frames in a time domain. Each of one or a plurality of frames in the time domain may be referred to as a subframe. The subframe may be further configured of one or a plurality of slots in the time domain. The subframe may be a fixed time length (for example, 1 ms) that does not depend on numerology.

The numerology may be a communication parameter to be applied to at least one of the transmission and the reception of a certain signal or channel. The numerology, for example, may indicate at least one of subcarrier spacing (SCS), a bandwidth, a symbol length, a cyclic prefix length, a transmission time interval (TTI), the number of symbols per TTI, a radio frame configuration, specific filtering processing that is performed by the transceiver in a frequency domain, specific windowing processing that is performed by the transceiver in a time domain, and the like.

The slot may be configured of one or a plurality of symbols (an orthogonal frequency division multiplexing (OFDM) symbol, a single carrier frequency division multiple access (SC-FDMA) symbol, and the like) in a time domain. The slot may be time unit based on the numerology.

The slot may include a plurality of mini slots. Each of the mini slots may be configured of one or a plurality of symbols in the time domain. In addition, the mini slot may be referred to as a subslot. The mini slot may be configured of symbols of which the number is less than that of the slot. PDSCH (or PUSCH) to be transmitted in time units greater than the mini slot may be referred to as a PDSCH (or PUSCH) mapping type A. PDSCH (or PUSCH) to be transmitted by using the mini slot may be referred to as a PDSCH (or PUSCH) mapping type B.

All of the radio frame, the subframe, the slot, the mini slot, and the symbol represent time units at the time of transmitting a signal. Other names respectively corresponding to the radio frame, the subframe, the slot, the mini slot, and the symbol may be used.

For example, one subframe may be referred to as a transmission time interval (TTI), a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, 1 to 13 symbols), or may be a period longer than 1 ms. Note that, a unit representing TTI may be referred to as a slot, a mini slot, and the like, but not a subframe. Also, one slot may be referred to as a unit time. The unit time may differ for each cell according to the numerology.

Here, TTI, for example, indicates a minimum time unit of scheduling in radio communication. For example, in an LTE system, the base station performs scheduling for allocating a radio resource (a frequency bandwidth, transmission power, and the like that can be used in each of the terminals 20) in TTI units, with respect to each of the terminals 20. Note that, the definition of TTI is not limited thereto.

TTI may be a transmission time unit of a data packet (a transport block), a code block, a codeword, and the like that are subjected to channel coding, or may be processing unit of scheduling, link adaptation, and the like. Note that, when TTI is applied, a time section (for example, the number of symbols) in which the transport block, the code block, the codeword, and the like are actually mapped may be shorter than TTI.

Note that, in a case where one slot or one mini slot is referred to as TTI, one or more TTIs (that is, one or more slots or one or more mini slots) may be the minimum time unit of the scheduling. In addition, the number of slots (the number of mini slots) configuring the minimum time unit of the scheduling may be controlled.

TTI having a time length of 1 ms may be referred to as a normal TTI (TTI in LTE Rel.8-12), a normal TTI, a long TTI, a normal subframe, a normal subframe, a long subframe, a slot, and the like. TTI shorter than the normal TTI may be referred to as a shortened TTI, a short TTI, a partial TTI (or a fractional TTI), a shortened subframe, a short subframe, a mini slot, a subslot, a slot, and the like.

Note that, the long TTI (for example, the normal TTI, the subframe, and the like) may be replaced with TTI having a time length of greater than or equal to 1 ms, and the short TTI (for example, the shortened TTI and the like) may be replaced with TTI having a TTI length of less than a TTI length of the long TTI and greater than or equal to 1 ms.

The resource block (RB) is a resource allocation unit of the time domain and the frequency domain, and may include one or a plurality of consecutive subcarriers in the frequency domain. The number of subcarriers included in RB may be the same regardless of the numerology, or for example, may be 12. The number of subcarriers included in RB may be determined based on the numerology.

In addition, the time domain of RB may include one or a plurality of symbols, or may be the length of one slot, one mini slot, one subframe, or one TTI. One TTI, one subframe, and the like may be respectively configured of one or a plurality of resource blocks.

Note that, one or a plurality of RBs may be referred to as a physical resource block (physical RB: PRB), a sub-carrier group (SCG), a resource element group (REG), a PRB pair, an RB pair, and the like.

In addition, the resource block may be configured of one or a plurality of resource elements (RE). For example, one RE may be a radio resource domain of one subcarrier and one symbol.

A bandwidth part (BWP) (may be referred to as a part bandwidth or the like) may represent a subset of consecutive common resource blocks (common RBs) for certain numerology, in a certain carrier. Here, the common RB may be specified by an index of RB based on a common reference point of the carrier. PRB may be defined by a certain BWP, and may be numbered within BWP.

BWP may include BWP for UL (UL BWP) and BWP for DL (DL BWP). In UE, one or a plurality of BWPs may be configured within one carrier.

At least one of the configured BWPs may be active, and it need not be assumed that the UE transmits and receives a predetermined signal/channel out of the active BWP. Note that, the "cell", the "carrier", and the like in this disclosure may be replaced with "BWP".

The structure of the radio frame, the subframe, the slot, the mini slot, the symbol, and the like, described above, is merely an example. For example, the configuration of the number of subframes included in the radio frame, the number of slots per a subframe or a radio frame, the number of mini slots included in the slot, the number of symbols and RBs included in the slot or a mini slot, the number of subcarriers included in RB, the number of symbols in TTI, a symbol length, a cyclic prefix (CP) length, and the like can be variously changed.

In this disclosure, for example, in a case where articles such as "a", "an", and "the" are added by translation, this disclosure may include a case where nouns following the articles are plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

As described above, this disclosure has been described in detail, but it is obvious for a person skilled in the art that this disclosure is not limited to the embodiment described in this disclosure. This disclosure can be implemented as corrected and modified without departing from the spirit and scope of this disclosure defined by the description of the claims. Therefore, the description in this disclosure is for illustrative purposes and does not have any limiting meaning with respect to this disclosure.

### Description of Symbols

- 10: base station
- 110: transmission unit
- 120: reception unit
- 130: configuration unit
- 140: control unit
- 20: terminal
- 210: transmission unit
- 220: reception unit
- 230: configuration unit
- 240: control unit
- 30: LMF
- 1001: processor
- 1002: storage device
- 1003: auxiliary storage device
- 1004: communication device
- 1005: input device
- 1006: output device
- 2001: vehicle
- 2002: drive unit
- 2003: steering unit
- 2004: accelerator pedal
- 2005: brake pedal
- 2006: shift lever
- 2007: front wheels
- 2008: rear wheels
- 2009: axle
- 2010: electronic control unit
- 2012: information service unit
- 2013: communication module
- 2021: current sensor
- 2022: revolution sensor
- 2023: pneumatic sensor
- 2024: vehicle speed sensor
- 2025: acceleration sensor
- 2026: brake pedal sensor
- 2027: shift lever sensor
- 2028: object detection sensor
- 2029: accelerator pedal sensor
- 2030: driving support system unit
- 2031: microprocessor
- 2032: memory (ROM, RAM)
- 2033: communication port (IO port)

## Claims

1. A terminal comprising:
a reception unit configured to receive configuration information for carrier phase positioning from a network; and
a control unit configured to determine, in carrier phase positioning, a positioning method to be used for wave number determination based on assistance data or a request for assistance data.

2. The terminal as claimed in claim 1, wherein the control unit uses, as the assistance data, measurement quality, a margin of a timing error group, or priority.

3. The terminal as claimed in claim 1,
wherein, when assistance data satisfying a condition is received from a network, the control unit uses, for wave number determination, a positioning method corresponding to the assistance data.

4. A base station comprising:
a reception unit configured to receive configuration information for carrier phase positioning from a management apparatus; and
a control unit configured to determine, in carrier phase positioning, a positioning method to be used for wave number determination based on assistance data or a request for assistance data.

5. A communication method executed by a terminal, the communication method comprising:
receiving configuration information for carrier phase positioning from a network; and
in carrier phase positioning, determining a positioning method to be used for wave number determination based on assistance data or a request for assistance data.

6. A communication method executed by a base station, the communication method comprising:
receiving configuration information for carrier phase positioning from a management apparatus; and
in carrier phase positioning, determining a positioning method to be used for wave number determination based on assistance data or a request for assistance data.
